(19) Europäisches Patentamt

European Patent Office

Office européen des brevets

(11) **EP 1 401 673 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(21) Anmeldenummer: 02754795.9

(22) Anmeldetag: **29.06.2002**

(51) Int Cl.⁷: $B60K\ 41/28$

(86) Internationale Anmeldenummer:
**PCT/EP2002/007200**

(87) Internationale Veröffentlichungsnummer:
**WO 2003/004300 (16.01.2003 Gazette 2003/03)**

(54) **VERFAHREN ZUR STEUERUNG DES GANGAUSLEGENS BEI EINEM AUTOMATISIERTEN STUFENGETRIEBE**

METHOD FOR CONTROLLING GEAR DEFINITION IN AN AUTOMATED STEPPED GEARBOX

PROCEDE POUR COMMANDER LA DEFINITION DES RAPPORTS SUR UNE BOITE DE VITESSES MULTI- TAG E AUTOMATIQUE

(84) Benannte Vertragsstaaten:
**DE FR IT SE**

(30) Priorität: **05.07.2001 DE 10132738**

(43) Veröffentlichungstag der Anmeldung:
**31.03.2004 Patentblatt 2004/14**

(73) Patentinhaber: **ZF FRIEDRICHSHAFEN AG**
**88038 Friedrichshafen (DE)**

(72) Erfinder:
• **DÖBELE, Bernd**
**55682 Salem (DE)**
• **WIENCEK, Norbert**
**88709 Hagnau (DE)**

(56) Entgegenhaltungen:
**EP-A- 0 390 423        DE-A- 19 802 736**
**DE-A- 19 954 552      US-A- 4 324 322**

EP 1 401 673 B1

**Beschreibung**

Die Erfindung betrifft ein Verfahren zur Steuerung des Gangauslegens bei einem automatisierten Stufengetriebe für ein Kraftfahrzeug nach dem Oberbegriff des Hauptanspruchs.

Beim Gangwechsel bei automatisierten Stufengetrieben tritt systembedingt eine Zugkraftunterbrechung auf. Während der Gangschaltung laufen üblicherweise die folgenden Verfahrensschritte ab:

- Reduktion des vom Antriebsmotor abgegebenen Drehmoments;
- Öffnen der Trennkupplung;
- Auslegen des alten Ganges;
- Einlegen des neuen Ganges;
- Schließen der Trennkupplung;
- Erhöhung des abgegebenen Drehmoments auf einen der Fahrpedalstellung entsprechenden Betrag.

Insbesondere bei hohen Zugkraftanforderungen, z. B. an Steigungsstrecken sollen die Schaltungen schnell erfolgen, damit eine Verlangsamung des Fahrzeugs während der Schaltung vermieden wird. Allerdings sind auch Komfortkriterien einzuhalten und die Belastung der Schaltelemente muss innerhalb bestimmter Grenzen bleiben. Je nach Fahrsituation ist ein unterschiedlicher zeitlicher Ablauf der Verfahrensschritte erforderlich, damit die Schaltzeit-, Komfortund Belastungskriterien eingehalten werden.

Die DE 198 02 736 A1 offenbart ein Verfahren, bei dem die Geschwindigkeit des Momentenabbaus zum Beginn der Schaltung und des Momentenaufbaus zum Ende der Schaltung in Abhängigkeit von der Fahrzeugbeschleunigung und dem Fahrpedalwinkel bestimmt wird. Nach diesem bekannten Verfahren wird am Ende der Rampe, mit der das Drehmoment reduziert wird, die Kupplung geöffnet und der Gang ausgelegt. Bei diesem Verfahren ist in bestimmten Fahrsituationen, verglichen mit einem optimalen Schaltungsablauf, der Zeitpunkt des Öffnens der Kupplung zu früh, oder zu spät.

Der vorliegenden Erfindung liegt daher die Aufgabe zugrunde, ein Verfahren zur Steuerung des Gangauslegens anzugeben, bei dem auf einfache Art und Weise der zeitliche Ablauf der Verfahrensschritte beim Gangauslegen optimierbar ist.

Erfindungsgemäß wird diese Aufgabe durch ein auch die Merkmale des kennzeichnenden Teils des Hauptanspruchs aufweisendes Verfahren gelöst. Demgemäß werden also die Schritte - Anlegen einer Schaltkraft zum Entkuppeln der Schaltelemente und Öffnen der Trennkupplung - dann ausgelöst, wenn die ständig, das heißt bei jedem Programmdurchlauf ermittelte Fahrzeugbeschleunigung einen jeweils zugeordneten Fahrzeugbeschleunigungswert annimmt. Beim Schaltungsbeginn wird zunächst die momentane Anfangsfahrzeugbeschleunigung ermittelt und in einem Speicherbereich der elektronischen Steuerung gespeichert. In der Folge wird dann das vom Antriebsmotor abgegebene Drehmoment durch Verringerung der durch die Einspritzpumpe zugeführten Einspritzmenge stetig reduziert. Zum Beginn der Schaltung wird abhängig von der Anfangsfahrzeugbeschleunigung, einer dem Antriebsmotor zugeführten Kraftstoffeinspritzmenge und dem eingelegten Gang ein erster und ein zweiter Fahrzeugbeschleunigungswert ermittelt. Die aktuelle Fahrzeugbeschleunigung wird ständig mit dem ersten und dem zweiten Fahrzeugbeschleunigungswert verglichen. Sobald die aktuelle Fahrzeugbeschleunigung, den ersten Fahrzeugbeschleunigungswert erreicht oder unterschreitet, wird der Steller für die zu entkoppelnden Schaltelemente mit einer Schaltkraft beaufschlagt, so dass der Gang in der Folge ausgelegt wird.

Die aktuelle Fahrzeugbeschleunigung wird auch ständig mit dem zweiten Fahrzeugbeschleunigungswert verglichen. Sobald sie diesen zweiten Fahrzeugbeschleunigungswert erreicht oder unterschreitet, öffnet der Kupplungssteller die Kupplung. Dies kann insbesondere bei hohen Anfangsbeschleunigungswerten zeitlich nach dem Anlegen der Schaltkraft an die zu entkoppelnden Schaltelemente erfolgen. Da der erste und der zweite Fahrzeugbeschleunigungswert unabhängig voneinander ermittelt werden, kann auch der Fall eintreten, dass zuerst der zweite Fahrzeugbeschleunigungswert erreicht oder unterschritten wird. In diesem Fall wird jedoch spätestens zu diesem Zeitpunkt auch der Steller für die zu entkoppelnden Schaltelemente mit einer Schaltkraft beaufschlagt, da spätestens dann das im Getriebe übertragene Drehmoment so gering ist, dass die vom Steller aufgebrachte Schaltkraft zur Entkoppelung der Schaltkraftelemente ausreicht.

Die ermittelte Fahrzeugbeschleunigung, die beispielsweise gemessen oder durch Ableitung einer Geschwindigkeitsgröße errechnet werden kann, ist ein sehr guter Indikator für das zum jeweiligen Zeitpunkt vom Getriebe tatsächlich übertragene Drehmoment. Da der Zustand des Fahrzeugs während einer Schaltung in höchstem Maße instationär ist, liefern andere Verfahren, die auf die Motorlast zurückgreifen, oftmals zeitlich versetzte Ergebnisse. Die ersten und zweiten Fahrzeugbeschleunigungswerte sind abhängig von der dem Antriebsmotor zugeführten Kraftstoff-Einspritzmenge und einem eingelegten Gang bzw. Gangbereich in Kennfeldern in einem Speicherbereich der elektronischen Steuerung abgelegt, auf die bei jedem Programmdurchlauf zugegriffen wird.

In einer vorteilhaften Ausgestaltung der Erfindung wird das vom Antriebsmotor abgegebene Drehmoment mit einer Geschwindigkeit reduziert, welche von der Anfangsfahrzeugbeschleunigung und einer zum Beginn der Schaltung anliegenden Fahrpedalstellung abhängt.

Die Erfindung wird anhand der beiliegenden Zeichnungen näher erläutert, wobei

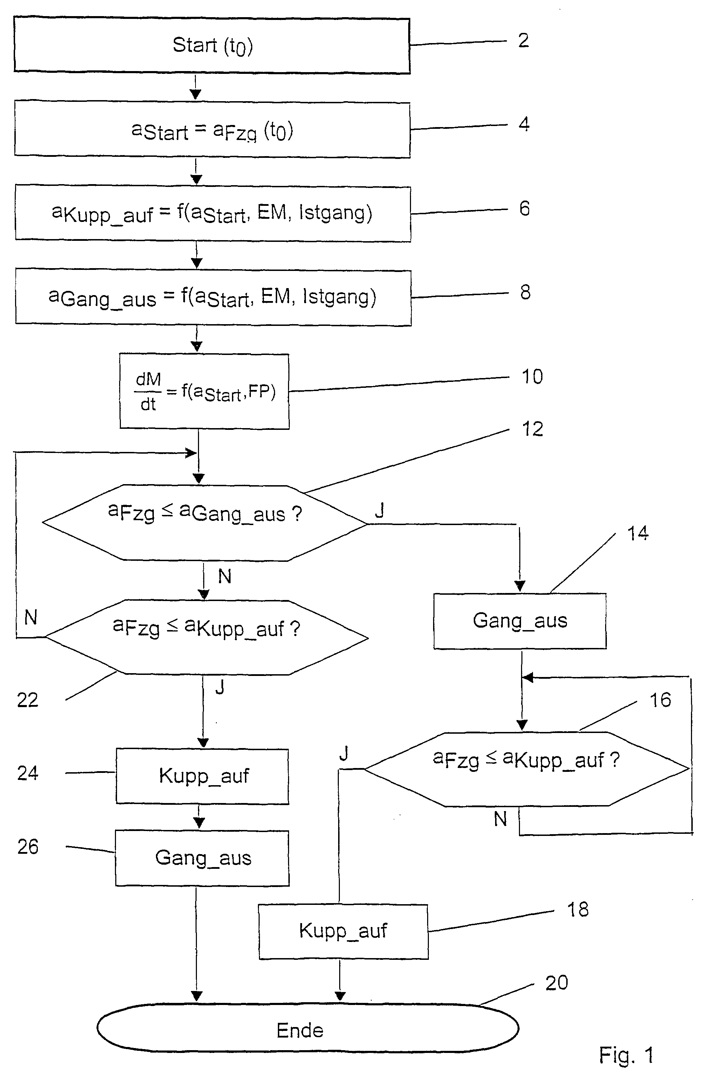

Fig. 1 ein Ablaufdiagramm des erfindungsgemäßen Verfahrens und

Fig. 2 einen zeitlichen Ablauf beim Gangauslegen

zeigen.

Der mit 2 bezeichnete Verfahrensschritt stellt den Beginn der Schaltung zum Zeitpunkt $t_0$ dar, bei dem der Zustand unmittelbar vor der Schaltung anliegt. Beim Verfahrensschritt 4 wird zum Zeitpunkt $t_0$ am Beginn der Schaltung die momentane Anfangs-Fahrzeugbeschleunigung $a_{start}$ ermittelt. Diese ist gleich der aktuellen Fahrzeugbeschleunigung $a_{Fzg}$ ($t_0$). In den Verfahrensschritten 6 und 8 werden zwei Fahrzeugbeschleunigungswerte $a_{Kupp\_auf}$ und $a_{Gang\_aus}$ ermittelt. Die Werte für diese Fahrzeugbeschleunigungen sind abhängig von der Anfangsfahrzeugbeschleunigung $a_{start}$, der dem Antriebsmotor zugeführten Kraftstoff-Einspritzmenge EM und dem eingelegten Ist-Gang in Kennfeldern in der elektronischen Steuerung abgelegt. Die beiden Fahrzeugbeschleunigungswerte $a_{Kupp\_auf}$ und $a_{Gang\_aus}$ werden in der elektronischen Getriebesteuerung abgespeichert und in der Folge ständig, d. h. bei jedem Programmdurchlauf mit der aktuellen Fahrzeugbeschleunigung $a_{Fzg}$ verglichen. Die aktuelle Fahrzeugbeschleunigung nimmt in Folge der Reduzierung des vom Antriebsmotors abgegebenen Drehmoments stetig ab. Die Geschwindigkeit $\frac{dM}{dt}$ mit der das vom Antriebsmotor abgegebene Drehmoment reduziert wird, ist eine Funktion der AnfangsFahrzeugbeschleunigung $a_{start}$ und der Fahrpedalstellung FP (siehe Programmschritt 10). Im folgenden Programmschritt 12 wird die aktuelle Fahrzeugbeschleunigung $a_{Fzg}$ mit dem Fahrzeugbeschleunigungswert $a_{Gang\_aus}$ verglichen. Ist die aktuelle Fahrzeugbeschleunigung $a_{Fzg}$ kleiner oder gleich dem Fahrzeugbeschleunigungswert $a_{Gang\_aus}$, so wird im Programmschritt 14 ein Befehl ausgelöst, der bewirkt, dass die zu entkoppelnden Schaltelemente durch den Steller mit einer Schaltkraft beaufschlagt werden. Sobald das an den Schaltelementen anliegende Drehmoment klein genug ist, lösen sich die zu entkoppelnden Schaltelemente in Folge der anliegenden Schaltkraft und der Gang wird ausgelegt. Bis auch der zweite Fahrzeugbeschleunigungswert $a_{Kupp\_auf}$ von der aktuellen Fahrzeugbeschleunigung $a_{Fzg}$ unterschritten wird, wird der Programmschritt 16 in einer Schleife durchlaufen bis schließlich auch die Trennkupplung im Programmschritt 18 geöffnet wird, womit das Gangauslegen im Programmschritt 20 beendet ist.

Solange keiner der beiden Fahrzeugbeschleunigungswerte $a_{Gang\_aus}$, $a_{Kupp\_auf}$ erreicht bzw. unterschritten ist, werden die Abfragen im Programmschritt 12 und im Programmschritt 22 in einer Schleife wiederholt. Wird zuerst der Fahrzeugbeschleunigungswert $a_{Kupp\_auf}$ von der aktuellen Fahrzeugbeschleunigung $a_{Fzg}$ unterschritt, so wird die Trennkupplung im Programmschritt 24 geöffnet und gleich darauf folgend der Steller für die zu entkoppelnden Schaltelemente im Programmschritt 26 mit einer Schaltkraft beaufschlagt, womit das Ende der Funktion erreicht ist.

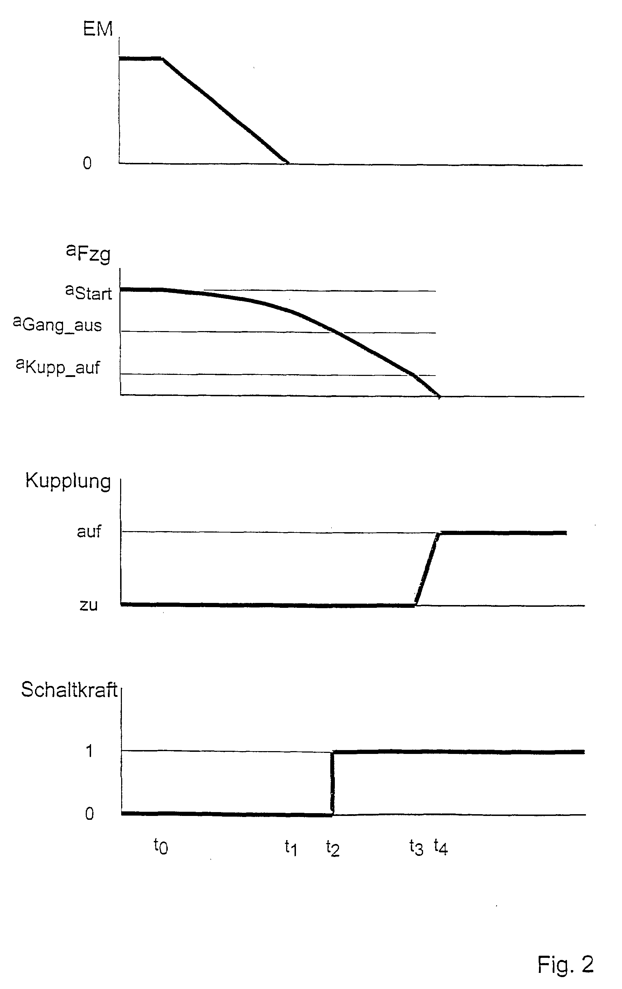

Fig. 2 zeigt einen zeitlichen Verlauf der Verfahrensschritte nach dem erfindungsgemäßen Verfahren. Im obersten Teildiagramm ist der zeitliche Verlauf der Einspritzmenge EM dargestellt. Nach einem Schaltbefehl wird zum Zeitpunkt $t_0$ mit der Reduktion der Einspritzmenge begonnen, wodurch das vom Antriebsmotor gegebene Drehmoment reduziert wird. Die Steigung mit der die Einspritzmenge im Zeitraum von $t_0$ bis $t_1$ reduziert wird, ist ein Maß für die Geschwindigkeit $\frac{dM}{dt}$ der Reduktion des vom Antriebsmotor abgegebenen Drehmoments. Diese Geschwindigkeit ist abhängig von der Anfangsfahrzeugbeschleunigung $a_{start}$ und der anliegenden Fahrpedalstellung FP jeweils zum Zeitpunkt $t_0$. Die Geschwindigkeit der Reduktion des vom Antriebsmotor abgegebenen Drehmoments ist um so größer, je größer die Anfangsfahrbeschleunigung und je größer die Anfangsfahrpedalstellung ist.

Im zweiten Teildiagramm ist der Verlauf der Fahrzeugbeschleunigung $a_{Fzg}$ dargestellt. Die aktuelle Fahrzeugbeschleunigung zum Zeitpunkt $t_0$ ist die Anfangs-Fahrzeugbeschleunigung $a_{start}$, welche zur Ermittlung der Fahrzeugbeschleunigungswerte $a_{Gang\_aus}$ und $a_{Kupp\_auf}$ herangezogen wird. Die aktuelle Fahrzeugbeschleunigung $a_{Fzg}$ nimmt in Folge der Reduktion der Einspritzmenge zeitverzögert ab. Die Zeitverzögerung resultiert teilweise von einer zeitverzögerten Reaktion des Antriebsmotors. Ausserdem sind im Antriebsstrang mehrere Bauteile, insbesondere die langen Gelenkwellen, unter Last elastisch verformt. Die darin gespeicherte Energie baut sich mit der Reduktion des vom Antriebsmotors abgegebenen Drehmoments ebenfalls nur allmählich ab.

Zum Zeitpunkt $t_2$ erreicht die aktuelle Fahrzeugbeschleunigung $a_{Fzg}$ den Fahrzeugbeschleunigungswert $a_{Gang\_aus}$. Im untersten Teildiagramm von Fig. 2 ist erkennbar, dass zu diesem Zeitpunkt die zu entkoppelnden Schaltelemente mit einer Schaltkraft beaufschlagt werden. Zum Zeitpunkt $t_3$ erreicht die aktuelle Fahrzeugbeschleunigung $a_{Fzg}$ den Fahrzeugbeschleunigungswert $a_{Kupp\_auf}$. In dem dritten Teildiagramm in Fig. 2 ist erkennbar, dass zu diesem Zeitpunkt der Kupplungssteller beginnt, die Kupplung zu öffnen. Zum Zeitpunkt $t_4$ ist die Kupplung dann schließlich geöffnet. Spätestens zu diesem Zeitpunkt übertragen die zu entkoppelnden Schaltelemente kein Drehmoment mehr, sodass sie mit einer geringen Schaltkraft entkoppelbar sind. Die Entkoppelung der Schaltelemente kann aber bereits vor dem Öffnen der Kupplung erfolgt sein, wenn das Drehmoment bereits in Folge der Reduktion der Einspritzmenge einen entsprechend kleinen Wert angenommen hat.

Gemäß der Erfindung laufen die Ereignisse "Beaufschlagung der zu entkoppelnden Schaltelemente mit einer Schaltkraft" und "Öffnen der Kupplung" nicht in einer vorgegebenen immer gleichen Abfolge ab. Die Fahrzeugbeschleunigungswerte, bei denen diese Er-

eignisse ausgelöst werden, werden unabhängig voneinander zu Beginn der Schaltung ermittelt. Die Abstimmung wird wesentlich vereinfacht, da die Werte für verschiedene Fahrsituationen zunächst unabhängig voneinander eingestellt werden.

## Patentansprüche

1. Verfahren zur Steuerung des Gangauslegens bei einem automatisierten Stufengetriebe in einem Fahrzeugantrieb mit einem Antriebsmotor und einer trieblich zwischen dem Antriebsmotor und dem Stufengetriebe angeordneten Trennkupplung, welche sich durch einen Kupplungssteller wahlweise öffnen oder schließen lässt, wobei das vom Antriebsmotor abgegebene Drehmoment zum Beginn der Schaltung reduziert wird, so dass die beim Gangauslegen zu entkoppelnden Schaltelemente durch einen Steller mit einer geringen Schaltkraft entkoppelbar sind und die Drehzahl des Antriebsmotors beim Öffnen der Kupplung nicht ungewollt ansteigt, **dadurch gekennzeichnet ,**

    - **dass** eine aktuelle Fahrzeugbeschleunigung ($a_{Fzg}$) ständig ermittelt wird,
    - **dass** zu einem Zeitpunkt ($t_0$) am Beginn der Schaltung eine momentane Anfangs-Fahrzeugbeschleunigung ($a_{start}$) ermittelt wird,
    - **dass** ein erster und ein zweiter Fahrzeugbeschleunigungswert ($a_{Gang\_aus}$, $a_{Kupp\_auf}$) Jeweils abhängig von der Anfangs-Fahrzeugbeschleunigung ($a_{start}$), einer dem Antriebsmotor zugeführten Kraftstoff-Einspritzmenge EM und einem eingelegten Ist-Gang ermittelt werden,
    - **dass** die aktuelle Fahrzeugbeschleunigung ($a_{Fzg}$) ständig mit dem ersten und dem zweiten Fahrzeugbeschleunigungswert ($a_{Gang\_aus}$, $a_{Kupp\_auf}$) verglichen wird,
    - **dass**, wenn die aktuelle Fahrzeugbeschleunigung ($a_{Fzg}$) den ersten Fahrzeugbeschleunigungswert ($a_{Gang\_aus}$) erreicht oder unterschreitet, der Steller die zu entkoppelnden Schaltelemente mit einer Schaltkraft beaufschlagt und
    - **dass**, wenn die aktuelle Fahrzeugbeschleunigung ($a_{Fzg}$) den zweiten Fahrzeugbeschleunigungswert ($a_{Kupp\_auf}$) erreicht oder unterschreitet, der Kupplungssteller die Kupplung öffnet, wobei spätestens dann auch der Steller für die zu entkoppelnden Schaltelemente mit einer Schaltkraft beaufschlagt wird.

2. Verfahren nach Anspruch 1, **dadurch gekennzeichnet, dass** vom Antriebsmotor abgegebene Drehmoment mit einer Geschwindigkeit reduziert wird, welche von der Anfangs-Fahrzeugbeschleunigung ($a_{start}$) und einer zum Zeitpunkt ($t_0$) anliegenden Fahrpedalstellung (FP) abhängt.

## Claims

1. The invention relates to a method for controlling gear disengagement in an automated range transmission of an automotive drive comprising a driving engine and a separating clutch, which is arranged between the driving engine and the range transmission and can be opened or closed by a clutch actuator, with the torque provided by the driving engine being reduced at the start of the shift, so that the shifting elements to be released during gear disengagement can be released by an actuator with a low shifting force being applied and so that the speed of the driving engine does not inadvertently increase when the clutch opens, **characterized in that**

    - a current vehicle acceleration value ($a_{vehicle}$) is constantly sensed;
    - at a point in time ($t_0$) at the start of the shift, an initial vehicle acceleration value ($a_{start}$) is sensed;
    - a first and a second vehicle acceleration value ($a_{gear\_off}$, $a_{clutch\_open}$) is determined, with each depending on the initial vehicle acceleration ($a_{start}$), a fuel-injection amount EM supplied to the driving engine and an actual gear engaged;
    - the current vehicle acceleration value ($a_{vehicle}$) is constantly compared with the first and the second vehicle acceleration value ($a_{gear\_off}$, $a_{clutch\_open}$);
    - when the current vehicle acceleration value ($a_{vehicle}$) corresponds to or falls below the first vehicle acceleration value ($a_{gear\_off}$), the actuator applies a shifting force to the shifting elements to be disengaged; and
    - when the current vehicle acceleration value ($a_{vehicle}$) corresponds to or falls below the second vehicle acceleration value ($a_{clutch\_open}$), the clutch actuator opens the clutch, with at this point in time at the latest the actuator for the shifting elements to be disengaged being exposed to a shifting force.

2. A method according to claim 1, **characterized in that** the torque provided by the driving engine is reduced at a speed which depends on the initial vehicle acceleration ($a_{start}$) and an accelerator pedal position (FP) at a point in time ($t_0$).

## Revendications

1. Procédé pour commander le passage des vitesses dans une transmission à rapports étagés automatisée incluse dans un entraînement de véhicule qui comprend un moteur d'entraînement et un embrayage de désolidarisation disposé cinématiquement entre le moteur d'entraînement et la transmission à rapports étagés et qui peut être embrayé ou débrayé sélectivement par un organe de manoeuvre d'embrayage, dans lequel le couple développé par le moteur d'entraînement est réduit au début du changement, de manière que les éléments de changement qui doivent être désaccouplés au moment du passage de la vitesse puissent être désaccouplés par un organe de manoeuvre avec une faible force de changement et que la vitesse de rotation du moteur d'entraînement ne s'accroisse pas involontairement au moment du débrayage de l'embrayage, **caractérisé en ce que**

- une accélération actuelle du véhicule ($a_{Fzg}$) est détectée en permanence,
- une accélération initiale instantanée du véhicule ($a_{start}$) est détectée à un instant ($t_0$) situé au début du changement,
- une première et une deuxième valeur d'accélération du véhicule ($a_{Gang\_aus}$, $a_{Kupp\_auf}$) sont détectées, chacune en fonction de l'accélération initiale du véhicule ($a_{start}$), d'une quantité d'injection de carburant EM acheminée au moteur d'entraînement et d'une vitesse réelle enclenchée,
- l'accélération actuelle du véhicule ($a_{Fzg}$) est en permanence comparée à la première et à la deuxième valeur d'accélération du véhicule ($a_{Gang\_aus}$, $a_{Kupp\_auf}$),
- lorsque l'accélération actuelle du véhicule ($a_{Fzg}$) atteint la première valeur d'accélération du véhicule ($a_{Gang\_aus}$), ou la franchit dans le sens descendant, l'organe de manoeuvre attaque les éléments de changement à désaccoupler avec une force de changement, et
- lorsque l'accélération actuelle du véhicule ($a_{Fzg}$) atteint la deuxième valeur d'accélération du véhicule ($a_{Kupp\_auf}$) dans le sens descendant, l'organe de manoeuvre de l'embrayage débraye l'embrayage, tandis qu'au plus tard à ce moment, l'organe de manoeuvre pour les éléments de changement à désaccoupler est attaqué avec une force de changement.

2. Procédé selon la revendication 1, **caractérisé en ce que** le couple développé par le moteur d'entraînement est réduit avec une vitesse qui dépend de l'accélération initiale du véhicule ($a_{start}$) et d'une position de la pédale d'accélérateur (FP) qui existe à l'instant ($t_0$).

Start ($t_0$) — 2

$a_{Start} = a_{Fzg} (t_0)$ — 4

$a_{Kupp\_auf} = f(a_{Start}, EM, Istgang)$ — 6

$a_{Gang\_aus} = f(a_{Start}, EM, Istgang)$ — 8

$\dfrac{dM}{dt} = f(a_{Start}, FP)$ — 10

12

$a_{Fzg} \leq a_{Gang\_aus}$ ? — J

N

$a_{Fzg} \leq a_{Kupp\_auf}$ ?

N

22

J

24 — Kupp_auf

26 — Gang_aus

14 — Gang_aus

16

J — $a_{Fzg} \leq a_{Kupp\_auf}$ ?

N

18 — Kupp_auf

20

Ende

Fig. 1

Fig. 2